# EUROPÄISCHE PATENTSCHRIFT

(11) **EP 4 547 986 B1**
(45) Veröffentlichungstag und Bekanntmachung des Hinweises auf die Patenterteilung: **05.08.2026**
(21) Anmeldenummer: 23734466.8
(22) Anmeldetag: 20.06.2023
(51) Int. Cl.: F16H 57/022, F16H 57/031, F16H 57/033

(54) **ANTRIEB, INSBESONDERE RÜHRANTRIEB**
DRIVE, IN PARTICULAR STIRRING DRIVE
ENTRAÎNEMENT, EN PARTICULIER ENTRAÎNEMENT D'AGITATION

(30) Priorität: 01.07.2022 CN 202210774510; 21.09.2022 DE 102022003481
(43) Veröffentlichungstag der Anmeldung: 07.05.2025
(73) Patentinhaber: SEW-EURODRIVE GmbH & Co. KG, 76646 Bruchsal (DE)
(72) Erfinder: WU, Zili, Tianjin, 300381 (CN)
(86) Internationale Anmeldenummer: PCT/EP2023/025287
(87) Internationale Veröffentlichungsnummer: WO 2024/002515

(56) Entgegenhaltungen:
- WO-A1-2014/111250
- DE-A1- 2 535 984
- DE-U- 1 856 129
- KR-B1- 100 996 428

## Beschreibung

Die Erfindung betrifft einen Antrieb, insbesondere Rührantrieb.

Es ist allgemein bekannt, dass ein Getriebe eines Getriebemotors von einem Elektromotor antreibbar ist.

Aus der KR 10 0 996 428 B1 ist als nächstliegender Stand der Technik ein Rührantrieb bekannt.

Aus der DE 18 56 129 U ist ein Rührwerksgetriebe bekannt.

Aus der DE 199 07 181 A1 ist die Verbindung einer geschlitzten Hohlwelle mit einem eingreifenden Gegenstück bekannt.

Aus der DE 10 2011 013 887 A1 ist eine Klemmkupplung zur drehfesten Verbindung zweier drehender Teile bekannt.

Aus der CN 1 03 986 273 A ist ein Bandantrieb bekannt.

Aus der DE 10 2019 109 921 A1 ist ein Verfahren zur Schaffung einer Pressverbindungsanordnung bekannt.

Aus der DE 10 2011 005 408 A1 ist eine Fügeverbindung bekannt.

**Aus der** WO 2014/111250 A1 **ist ein Antrieb bekannt.**

**Aus der** DE 25 35 984 A1 **ist eine Vorrichtung zum Auswechseln der** Dichtung **eines mit einer Dichtung versehenen Antriebs für Rührwerke bekannt.**

Der Erfindung liegt daher die Aufgabe zugrunde, einen qualitativ hochwertigen Herstellaufwand kostengünstig zu ermöglichen.

Erfindungsgemäß wird die Aufgabe bei dem Antrieb nach den in Anspruch 1 angegebenen Merkmalen gelöst.

Von Vorteil ist dabei, dass erfindungsgemäß dem Elektromotor samt Flanschplatte als mit dem Getriebe klemmverbindbare Einheit vorsehbar ist. Auf diese Weise ist der Motor schnell und einfach verbindbar. Daher kann bei der Herstellung des Getriebes eine Prüfung des Betriebs, insbesondere also ein probeweiser Betrieb, schnell und einfach ermöglicht werden. Denn es muss nur die Einheit auf das Getriebe aufgesetzt und angeklemmt werden. Dabei ist die Einheit für Getriebe mit unterschiedlich großen Ausnehmungen verwendbar. Denn die Klauen sind radial verschiebbar angeordnet.

Daher ist die selbe Einheit für den Probelauf unterschiedlicher Getriebe verwendbar und somit ein kostengünstiges Testen der Getriebe ermöglicht. Beim Probelauf wird das Getriebe getestet und somit eine Qualitätskontrolle durchgeführt, also die Qualität verbessert.

Der Innenraum des Getriebes ist zumindest teilweise mit Schmieröl befüllt, wobei dieses Schmieröl herumgespritzt wird und daher das Abdecken der Ausnehmung mittels der Flanschplatte die Betriebssicherheit erhöht.

Erfindungsgemäß ist somit ein qualitativ hochwertiger Herstellaufwand kostengünstig erreichbar.

Bei einer vorteilhaften Ausgestaltung ist der Antrieb derart ausgeführt, dass das Anklemmen der Klemmelemente an die Flanschplatte und/oder Andrücken der Klemmelemente an die Wandung mittels des Drucks eines Hydrauliköls aktivierbar und/oder deaktivierbar ist. Von Vorteil ist dabei, dass hierzu ein Hydraulikdruckgenerator mit Ölspeicher und Öldruckleitung auf der Flanschplatte, insbesondere auf der vom Getriebe abgewandten Seite der Flanschplatte, vorsehbar ist. Außerdem sind die Klemmelemente, insbesondere mit Hydraulikzylinder, ausgeführt, damit die Klemmverbindung hydraulisch aktivierbar beziehungsweise deaktivierbar ist.

Bei einer vorteilhaften Ausgestaltung ist die Rotorwelle über das Kardangelenk oder die Kardangelenke mit der längenveränderlichen Welle drehfest verbunden ist,
wobei die längenveränderliche Welle mit der Klemmwelle drehfest verbunden ist. Von Vorteil ist dabei, dass unterschiedliche Prüflinge, insbesondere Getriebe, verbindbar und/oder prüfbar sind.

Bei einer vorteilhaften Ausgestaltung weist die längenveränderliche Welle eine in eine Hohlwelle eingesteckte unrunde Welle auf,
wobei die unrunde Welle mit der Hohlwelle drehfest verbunden ist,

insbesondere wobei der Innenumfang der Hohlwelle unrund ist. Von Vorteil ist dabei, dass unterschiedliche Prüflinge, insbesondere Getriebe, verbindbar und/oder prüfbar sind

Bei einer vorteilhaften Ausgestaltung weist die Klemmwelle einen scheibenförmigen Bereich, insbesondere scheibenförmigen Fortsatz, auf,
wobei der scheibenförmige Bereich radial an der Klemmwelle hervorsteht,
wobei der scheibenförmige Bereich axial durchgehende Schlitze aufweist, entlang dessen die Klauen verschiebbar sind,
insbesondere wobei jede Klaue eine Gewindebohrung aufweist, in welche jeweils eine Schraube einschraubbar ist zum Anklemmen der jeweiligen Klaue an die Klemmwelle, insbesondere bei gleichzeitigem Andrücken an die eintreibende Welle. Von Vorteil ist dabei, dass unterschiedliche Prüflinge, insbesondere Getriebe, adaptierbar, verbindbar und/oder prüfbar sind

Bei einer vorteilhaften Ausgestaltung ist der Elektromotor mit Flanschplatte samt Klemmelementen, längenveränderlicher Welle und Klemmwelle samt Klauen als vorkomplettierte Einheit, insbesondere also transportfähige Einheit, ausgeführt. Von Vorteil ist dabei, dass unterschiedliche Prüflinge, insbesondere Getriebe, verbindbar und/oder prüfbar sind

Bei einer vorteilhaften Ausgestaltung ist ein Öldruckgenerator auf der Flanschplatte angeordnet, welcher mittels einer Öldruckleitung mit einem jeweiligen Klemmelement verbunden ist. Von Vorteil ist dabei, dass eine hydraulische Betätigung ausführbar ist.

Bei einer vorteilhaften Ausgestaltung ist die Flanschplatte eine zylindrische Scheibe. Von Vorteil ist dabei, dass eine einfache Herstellung ermöglicht ist.

Bei einer vorteilhaften Ausgestaltung sind die Drehachse der Rotorwelle und die Drehachse der eintreibenden Welle vertikal ausgerichtet. Von Vorteil ist dabei, dass das Getriebe in einem Rührwerk einsetzbar ist. insbesondere sind die Rotorwelle und die Welle koaxial zueinander ausgerichtet.

Bei einer vorteilhaften Ausgestaltung fungiert die abtreibende Welle des Getriebes als Rührerantrieb. Von Vorteil ist dabei, dass das Getriebe in einem Rührwerk einsetzbar ist.

Bei einer vorteilhaften Ausgestaltung weist die Flanschplatte eine erste Verzahnung auf, welche mit einer zweiten Verzahnung des Klemmelements im Eingriff ist. Von Vorteil ist dabei, dass eine sichere und stabile Befestigung ausführbar ist.

Bei einer vorteilhaften Ausgestaltung ist das jeweilige Klemmelement derart ausgeführt und die erste und die zweite Verzahnung sind derart sägezahnförmig ausgeführt, dass beim Aufbauen und/oder Erhöhen des Hydraulikdrucks das jeweilige Klemmelement, insbesondere in Schlitzrichtung, nach radial außen an die Wandung der Ausnehmung gedrückt wird. Von Vorteil ist dabei, dass eine sichere und stabile Verbindung gewährleistbar ist.

Bei einer vorteilhaften Ausgestaltung weist das jeweilige Klemmelement ein Oberteil und ein Unterteil auf, wobei das Unterteil oder das Oberteil die Verzahnung des Klemmelements aufweist und das Unterteil mittels der einen Hydraulikzylinder mit Druck beaufschlagenden Öldruckleitung nach radial außen gegen die Wandung der Ausnehmung gedrückt wird, insbesondere wobei mittels eines Führungselements, wie Bolzen oder Schrauben, das Unterteil relativ zum Oberteil bis zu einem Anschlag linear bewegbar angeordnet ist,
wobei die Öldruckleitung einen Hydraulikzylinder mit Druck beaufschlagt, welcher das Unterteil nach radial außen drückt, insbesondere während das Unterteil am Oberteil abgestützt ist, dass mittels der Verzahnung an der Flanschplatte abgestützt ist. Von Vorteil ist dabei, dass die Klemmverbindung mit Hydraulikdruck steuerbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

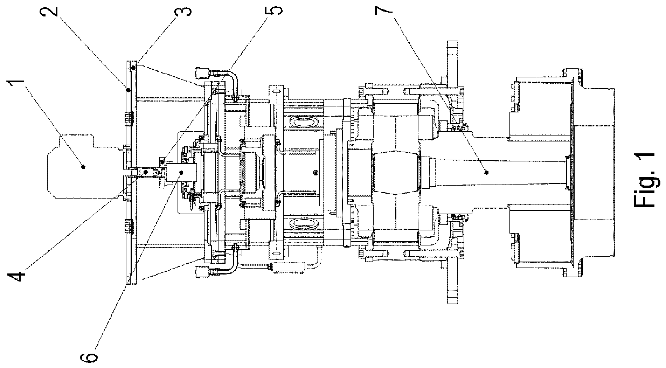

In der Figur 1 ist ein Querschnitt durch ein Getriebe dargestellt.

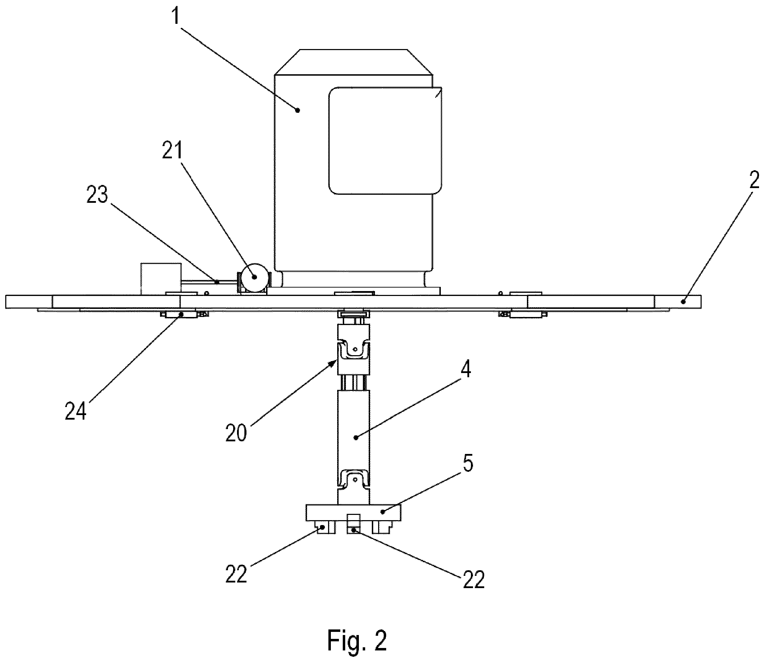

In der Figur 2 ist ein das Getriebe antreibender Elektromotor 1 in Seitenansicht dargestellt.

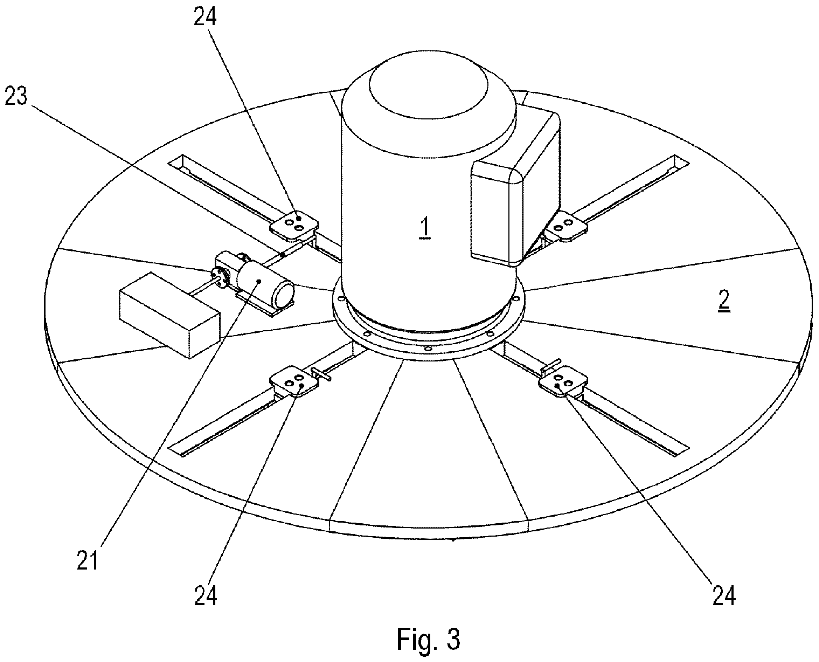

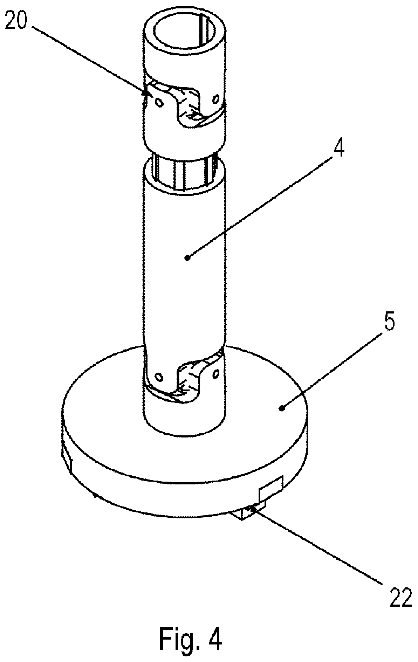

In der Figur 3 ist eine zugehörige Schrägansicht dargestellt.

Wie in den Figuren dargestellt, weist das erfindungsgemäße Getriebe eine eintreibende Welle 6 auf, die vom Elektromotor angetrieben wird.

Dabei ist die Rotorwelle des Elektromotors 1 über ein Kardangelenk 20 mit einer Teleskopwelle 4 verbunden, welche über ein weiteres Kardangelenk mit einer Klemmwelle 5 verbunden ist, welche einen scheibenartigen Bereich aufweist, der radial hervorsteht.

Die Teleskopwelle 4 ist längenveränderlich ausgeführt. Hierzu weist die Teleskopwelle 4 eine erste Welle auf, welche in eine Hohlwelle eingesteckt ist, insbesondere so dass die beiden Wellen in Drehrichtung der Wellenachse gegeneinander verschiebbar sind.

Die Welle ist an ihrem äußeren Umfang unrund ausgeführt und ebenso die Hohlwelle an ihrem radial inneren Umfang.

Somit sind die Welle und die Hohlwelle miteinander drehfest verbunden.

Das Gehäuse des Elektromotors 1 ist drehfest mit einer Flanschplatte 2 verbunden.

Auf der vom Getriebe abgewandten Seite der Flanschplatte 2 ist ein Öldruckgenerator 21 angeordnet, welcher aus einem Ölspeicher, der ebenfalls auf der Flanschplatte 2 montiert ist, mit Öl versorgbar ist. Mittels des Öldruckgenerators 21 ist ein hoher Öldruck aufbaubar, welcher mittels einer Ölleitung 23 eine Klemmverbindung der Flanschplatte 2 mit dem Getriebegehäuse 3 ermöglicht.

Hierzu weist die Flanschplatte 2, mehrere in Umfangsrichtung voneinander beabstandete axial durchgehende Schlitze auf, insbesondere die in radialer Richtung nicht in die äußere Umgebung münden. Entlang der Schlitze sind hydraulisch aktivierbare Klemmelemente 24 verschiebbar, die von der Ölleitung 23 versorgt sind.

Bei Aktivierung der Klemmelemente 24 klemmen diese sich an der Flanschplatte 2 fest.

Dabei ragen die Klemmelemente 24 auf der vom Motor 1 abgewandten Seite der Flanschplatte 2 axial hervor und fungieren somit als Klemmmittel zum Anklemmen der Flanschplatte an das Getriebegehäuse 3.

Mittels der Schlitze ist der Radialabstand der Klemmelemente 24 zur Drehachse der Rotorwelle des Elektromotors einstellbar.

Das Getriebegehäuse 3 weist eine Bohrung auf, deren lichter Innendurchmesser von der Art des Getriebes abhängt.

Die Flanschplatte 2 wird auf die Bohrung aufgelegt, so dass die Bohrung abgedeckt ist. Dabei werden die Klemmelemente 24 so weit radial verschoben, bis die Klemmelemente 24 an der Wandung der Bohrung anliegen. Bei hydraulischer Aktivierung werden die Klemmelemente 24 dann an die Wandung angepresst.

Auf diese Weise sind unterschiedlich große Bohrungen adaptierbar.

Beim Auflegen der Flanschplatte 2 wird auch die Rotorwelle des Elektromotors 1 über das Kardangelenk 20 und die Teleskopwelle 4 sowie Klemmwelle 5 mit der eintreibenden Welle 6 drehfest verbunden. Somit ist dann der Elektromotor 1 in der Lage, die eintreibende Welle 6 anzutreiben.

Am Rand der Schlitze weist die Flanschplatte 2 eine vorzugsweise sägezahnförmige Verzahnung 2.Die Klemmelemente 24 weisen eine korrespondierende Verzahnung auf, die derart im Eingriff ist mit der Verzahnung der Flanschplatte 2, dass beim Erhöhen des Hydraulikdrucks die Klemmelemente in Schlitzrichtung nach radial außen gedrückt werden und somit an die Wandung der Bohrung angepresst werden.

Jedes Klemmelement weist ein Oberteil und ein Unterteil auf, welche zum Festklemmen die zwischengeordnete Flanschplatte 2 andrücken und infolge der Verzahnung nach radial außen an die Wandung der Bohrung angedrückt werden.

Die Schlitze sind in Umfangsrichtung voneinander vorzugsweise gleichmäßig beabstandet. Beispielsweise sind vier Schlitze vorgesehen, die einen Umfangswinkel von 360°/N aufweisen, wobei N die Anzahl der Schlitze ist.

Die Klemmwelle weist ebenfalls radial gerichtete Schlitze auf, entlang derer Klauen 22 verschiebbar sind. Da die Klauen 22 durch diese Schlitze axial hindurchragen, sind die Klauen 22 in Umfangsrichtung drehfest verbunden mit der Klemmwelle 5. Da die Klauen 22 an die eintreibende Welle nach radial innen angedrückt und mit der Klemmwelle 5 verklemmt werden, ist das Drehmoment von der Klemmwelle 5 an die eintreibende Welle 6 des Getriebes durchleitbar.

Vorzugsweise ist die eintreibende Welle 6 vertikal ausgerichtet und die abtreibende Welle des Getriebes 7 ebenfalls.

Bei weiteren erfindungsgemäßen Ausführungsbeispielen fungiert die abtreibende Welle 7 als Rührerwelle eines Rührwerks.

Bei weiteren erfindungsgemäßen Ausführungsbeispielen krallt sich die Verzahnung eines Oberteils des jeweiligen Klemmelements 24 in die Verzahnung der Flanschplatte 1 ein. Nach Aufbau eines Hydraulikdrucks mittels einer Öldruckleitung wird das Unterteil nach radial außen gegen die Wandung der Ausnehmung gedrückt. Dabei stützt das Unterteil sich am Oberteil ab.

### Bezugszeichenliste

1 Elektromotor
2 Flanschplatte
3 Getriebegehäuse
4 Teleskopwelle
5 Klemmwelle
6 eintreibende Welle des Getriebes
7 abtreibende Welle des Getriebes, insbesondere Rührerwelle
20 Kardangelenk
21 Öldruckgenerator
22 Klaue
23 Ölleitung
24 Klemmelement

## Patentansprüche

1. Antrieb, insbesondere Rührantrieb,
wobei der Antrieb einen Elektromotor (1) und ein von dem Elektromotor (1) angetriebenes Getriebe aufweist,
wobei das Getriebe ein Getriebegehäuse (3) aufweist, welches eine Ausnehmung, aufweist, durch welche die Rotorwelle des Elektromotors (1) hindurchragt oder in welche die Rotorwelle des Elektromotors (1) hineinragt,
**dadurch gekennzeichnet, dass**
eine Flanschplatte (2) die Ausnehmung, von außen, abdeckt,
wobei die Flanschplatte (2) mit dem Gehäuse des Elektromotors (1) verbunden ist,
wobei die Rotorwelle mit einer eintreibenden Welle (6) des Getriebes mittels zumindest einer längenveränderlichen Welle, und zumindest einem Kardangelenk (20), und einer Klemmwelle (5) verbunden ist,
wobei an der Klemmwelle (5) radial verstellbare Klauen (22) angeordnet sind, welche die eintreibende Welle (6) des Getriebes einklemmen,
wobei an der Flanschplatte (2) radial verschiebbare Klemmelemente (24) angeordnet sind oder anklemmbar sind, welche an die Wandung der Ausnehmung angedrückt sind.

2. Antrieb nach Anspruch 1,
**dadurch gekennzeichnet, dass**
der Antrieb derart ausgeführt ist, dass das Anklemmen der Klemmelemente (24) an die Flanschplatte (2) oder Andrücken der Klemmelemente (24) an die Wandung mittels des Drucks eines Hydrauliköls aktivierbar und/oder deaktivierbar ist.

3. Antrieb nach einem der vorangegangenen Ansprüche,
**dadurch gekennzeichnet, dass**
die Rotorwelle über das Kardangelenk (20) oder die Kardangelenke (20) mit der längenveränderlichen Welle drehfest verbunden ist,
wobei die längenveränderliche Welle mit der Klemmwelle (5) drehfest verbunden ist.

4. Antrieb nach einem der vorangegangenen Ansprüche,
**dadurch gekennzeichnet, dass**
die längenveränderliche Welle eine in eine Hohlwelle eingesteckte unrunde Welle aufweist, wobei die unrunde Welle mit der Hohlwelle drehfest verbunden ist.

5. Antrieb nach Anspruch 4,
**dadurch gekennzeichnet, dass**
der Innenumfang der Hohlwelle unrund ist.

6. Antrieb nach einem der vorangegangenen Ansprüche,
**dadurch gekennzeichnet, dass**
die Klemmwelle (5) einen scheibenförmigen Bereich, aufweist,
wobei der scheibenförmige Bereich radial an der Klemmwelle (5) hervorsteht,
wobei der scheibenförmige Bereich axial durchgehende Schlitze aufweist, entlang dessen die Klauen (22) verschiebbar sind,

7. Antrieb nach einem der vorangegangenen Ansprüche,
**dadurch gekennzeichnet, dass**
der Elektromotor (1) mit Flanschplatte (2) samt Klemmelementen (24), längenveränderlicher Welle und Klemmwelle (5) samt Klauen (22) als vorkomplettierte Einheit, ausgeführt ist.

8. Antrieb nach einem der vorangegangenen Ansprüche,
**dadurch gekennzeichnet, dass**
ein Öldruckgenerator (21) auf der Flanschplatte (2) angeordnet ist, welcher mittels einer Öldruckleitung mit einem jeweiligen Klemmelement (24) verbunden ist.

9. Antrieb nach einem der vorangegangenen Ansprüche,
**dadurch gekennzeichnet, dass**
die Flanschplatte (2) eine zylindrische Scheibe ist.

10. Antrieb nach einem der vorangegangenen Ansprüche,
**dadurch gekennzeichnet, dass**
die Drehachse der Rotorwelle und die Drehachse der eintreibenden Welle (6) vertikal ausgerichtet sind.

11. Antrieb nach einem der vorangegangenen Ansprüche,
**dadurch gekennzeichnet, dass**
die abtreibende Welle des Getriebes als Rührerantrieb fungiert.

12. Antrieb nach einem der vorangegangenen Ansprüche,
**dadurch gekennzeichnet, dass**
die Flanschplatte (2) eine erste Verzahnung aufweist, welche mit einer zweiten Verzahnung des Klemmelements (24) im Eingriff ist.

13. Antrieb nach Anspruch 12 in Verbindung mit Anspruch 2,
**dadurch gekennzeichnet, dass**
das jeweilige Klemmelement (24) derart ausgeführt ist und die erste und die zweite Verzahnung derart sägezahnförmig ausgeführt sind, dass beim Aufbauen oder Erhöhen des Hydraulikdrucks das jeweilige Klemmelement (24), nach radial außen an die Wandung der Ausnehmung gedrückt wird.

14. Antrieb nach einem der vorangegangenen Ansprüche,
**dadurch gekennzeichnet, dass**
das jeweilige Klemmelement (24) ein Oberteil und ein Unterteil aufweist, wobei das Unterteil oder das Oberteil die Verzahnung des Klemmelements (24) aufweist und das Unterteil mittels der einen Hydraulikzylinder mit Druck beaufschlagenden Öldruckleitung nach radial außen gegen die Wandung der Ausnehmung gedrückt wird,
insbesondere wobei die Öldruckleitung den Hydraulikzylinder mit Druck beaufschlagt, welcher das Unterteil nach radial außen drückt, während das Unterteil am Oberteil abgestützt ist, das mittels der Verzahnung an der Flanschplatte (2) abgestützt ist.

15. Antrieb nach Anspruch 14,
**dadurch gekennzeichnet, dass**
mittels eines Führungselements das Unterteil relativ zum Oberteil bis zu einem Anschlag linear bewegbar angeordnet ist.

## Claims

1. A drive, in particular stirring drive,
wherein the drive has an electric motor (1) and a gear unit driven by the electric motor (1),
wherein the gear unit has a gear-unit housing (3) which has a cutout through which there projects the rotor shaft of the electric motor (1) or into which the rotor shaft of the electric motor (1) projects,
**characterised in that**
a flange plate (2) covers the cutout from the exterior,
wherein the flange plate (2) is connected to the housing of the electric motor (1),
wherein the rotor shaft is connected to an input shaft (6) of the gear unit by means of at least one shaft of variable length and at least one Cardan joint (20) and a clamping shaft (5),
wherein radially adjustable claws (22) are arranged on the clamping shaft (5) and grip the input shaft (6) of the gear unit,
wherein radially displaceable clamping elements (24) are arranged on the flange plate (2) or clampable thereto, which clamping elements (24) are pressed against the wall of the cutout.

2. A drive according to claim 1,
**characterised in that**
the drive is such that the clamping of the clamping elements (24) to the flange plate (2) or pressing of the clamping elements (24) against the wall is activatable or deactivatable by means of the pressure of a hydraulic oil.

3. A drive according to any one of the preceding claims,
**characterised in that**
the rotor shaft is connected in a rotationally-fixed manner to the shaft of variable length via the Cardan joint (20) or the Cardan joints (20),
wherein the shaft of variable length is connected to the clamping shaft (5) in a rotationally-fixed manner.

4. A drive according to any one of the preceding claims,
**characterised in that**
the shaft of variable length has a non-circular shaft inserted into a hollow shaft,
wherein the non-circular shaft is connected to the hollow shaft in a rotationally-fixed manner.

5. A drive according to claim 4,
**characterised in that**
the inner circumference of the hollow shaft is non-circular.

6. A drive according to any one of the preceding claims,
**characterised in that**
the clamping shaft (5) has a disc-shaped region,
wherein the disc-shaped region projects radially at the clamping shaft (5),
wherein the disc-shaped region has axially through-passing slits along which the claws (22) are displaceable.

7. A drive according to any one of the preceding claims,
**characterised in that**
the electric motor (1) with flange plate (2) together with clamping elements (24), a shaft of variable length and clamping shaft (5) together with claws (22) is a pre-assembled unit.

8. A drive according to any one of the preceding claims,
**characterised in that**
an oil pressure generator (21) is arranged on the flange plate (2) and is connected by means of an oil pressure line to a respective clamping element (24).

9. A drive according to any one of the preceding claims,
**characterised in that**
the flange plate (2) is a cylindrical disc.

10. A drive according to any one of the preceding claims,
**characterised in that**
the rotational axis of the rotor shaft and the rotational axis of the input shaft (6) are oriented vertically.

11. A drive according to any one of the preceding claims,
**characterised in that**
the output shaft of the gear unit acts as a stirrer drive.

12. A drive according to any one of the preceding claims,
**characterised in that**
the flange plate (2) has first toothing which engages second toothing of the clamping element (24).

13. A drive according to claim 12 in conjunction with claim 2,
**characterised in that**
the respective clamping element (24) is such in construction and the first and the second toothing are sawtooth-shaped in such a manner that upon a build up or increase of the hydraulic pressure, the respective clamping element (24) is pressed radially outwards against the wall of the cutout.

14. A drive according to any one of the preceding claims,
**characterised in that**
the respective clamping element (24) has an upper part and a lower part, wherein the lower part or the upper part has the toothing of the clamping element (24) and the lower part is pressed radially outwards against the wall of the cutout by means of the oil pressure line pressurising a hydraulic cylinder,
in particular wherein the oil pressure line pressurises the hydraulic cylinder which presses the lower part radially outwards, while the lower part is supported on the upper part which is supported on the flange part (2) by means of the toothing.

15. A drive according to claim 14,
**characterised in that**
by means of a guide element, the lower part is arranged so as to be linearly movable relative to the upper part as far as a stop.

## Revendications

1. Entraînement, en particulier entraînement d'agitateur, l'entraînement comprenant un moteur électrique (1) et un engrenage entraîné par le moteur électrique (1), l'engrenage comprenant un carter d'engrenage (3), lequel présente un évidement, à travers lequel l'arbre de rotor du moteur électrique (1) fait saillie ou dans lequel l'arbre de rotor du moteur électrique (1) s'étend, **caractérisé en ce qu'**une plaque à bride (2) recouvre l'évidement de l'extérieur, la plaque à bride (2) étant reliée au boîtier du moteur électrique (1), l'arbre de rotor étant relié à un arbre d'entraînement (6) de l'engrenage au moyen d'au moins un arbre à longueur variable, et au moins un joint de cardan (20), et un arbre de serrage (5), des griffes (22) réglables radialement étant disposées sur l'arbre de serrage (5), lesquelles serrent l'arbre d'entraînement (6) de l'engrenage, des éléments de serrage (24) déplaçables radialement étant disposés sur la plaque à bride (2) ou pouvant être serrés, lesquels sont appliqués contre la paroi de l'évidement.

2. Entraînement selon la revendication 1, **caractérisé en ce que** l'entraînement est conçu de telle sorte que le serrage des éléments de serrage (24) sur la plaque à bride (2) ou l'application des éléments de serrage (24) contre la paroi au moyen de la pression d'une huile hydraulique est activable ou désactivable.

3. Entraînement selon l'une quelconque des revendications précédentes, **caractérisé en ce que** l'arbre de rotor est relié en rotation, via le joint de cardan (20) ou les joints de cardan (20), à l'arbre à longueur variable, l'arbre à longueur variable étant relié en rotation à l'arbre de serrage (5).

4. Entraînement selon l'une quelconque des revendications précédentes, **caractérisé en ce que** l'arbre à longueur variable présente un arbre non circulaire inséré dans un arbre creux, l'arbre non circulaire étant relié en rotation à l'arbre creux.

5. Entraînement selon la revendication 4, **caractérisé en ce que** la circonférence intérieure de l'arbre creux est non circulaire.

6. Entraînement selon l'une quelconque des revendications précédentes, **caractérisé en ce que** l'arbre de serrage (5) présente une zone en forme de disque,
la zone en forme de disque faisant saillie radialement sur l'arbre de serrage (5), la zone en forme de disque présentant des fentes traversantes axialement, le long desquelles les griffes (22) sont déplaçables.

7. Entraînement selon l'une quelconque des revendications précédentes, **caractérisé en ce que** le moteur électrique (1) avec la plaque à bride (2) ainsi que les éléments de serrage (24), l'arbre à longueur variable et l'arbre de serrage (5) ainsi que les griffes (22) sont réalisés comme une unité prémontée.

8. Entraînement selon l'une quelconque des revendications précédentes, **caractérisé en ce qu'**un générateur de pression d'huile (21) est disposé sur la plaque à bride (2), lequel est relié à chaque élément de serrage (24) au moyen d'une conduite de pression d'huile.

9. Entraînement selon l'une quelconque des revendications précédentes, **caractérisé en ce que** la plaque à bride (2) est un disque cylindrique.

10. Entraînement selon l'une quelconque des revendications précédentes, **caractérisé en ce que** l'axe de rotation de l'arbre de rotor et l'axe de rotation de l'arbre d'entraînement (6) sont orientés verticalement.

11. Entraînement selon l'une quelconque des revendications précédentes, **caractérisé en ce que** l'arbre de sortie de l'engrenage fonctionne comme entraînement d'agitateur.

12. Entraînement selon l'une quelconque des revendications précédentes, **caractérisé en ce que** la plaque à bride (2) présente une première denture, laquelle est en prise avec une seconde denture de l'élément de serrage (24).

13. Entraînement selon la revendication 12 en combinaison avec la revendication 2, **caractérisé en ce que** chaque élément de serrage (24) est conçu de telle sorte et la première et la seconde denture sont réalisées en forme de dent de scie de telle manière que, lors de la génération ou de l'augmentation de la pression hydraulique, chaque élément de serrage (24) est poussé radialement vers l'extérieur contre la paroi de l'évidement.

14. Entraînement selon l'une quelconque des revendications précédentes, **caractérisé en ce que** chaque élément de serrage (24) présente une partie supérieure et une partie inférieure, la partie inférieure ou la partie supérieure présentant la denture de l'élément de serrage (24) et la partie inférieure étant poussée radialement vers l'extérieur contre la paroi de l'évidement au moyen de la conduite de pression d'huile appliquant une pression à un vérin hydraulique,
en particulier la conduite de pression d'huile appliquant une pression au vérin hydraulique, lequel pousse la partie inférieure radialement vers l'extérieur, tandis que la partie inférieure est supportée sur la partie supérieure, laquelle est supportée sur la plaque à bride (2) au moyen de la denture.

15. Entraînement selon la revendication 14, **caractérisé en ce que**, au moyen d'un élément de guidage, la partie inférieure est disposée de manière déplaçable linéairement par rapport à la partie supérieure jusqu'à une butée.
